# EUROPEAN PATENT SPECIFICATION

(11) **EP 4 078 359 B1**
(45) Date of publication and mention of the grant of the patent: **17.07.2024**
(21) Application number: 19828740.1
(22) Date of filing: 19.12.2019
(51) Int. Cl.: G06F 8/65, G06F 21/57

(54) **A METHOD AND A COMMUNICATION DEVICE FOR UPDATING SOFTWARE**
VERFAHREN UND KOMMUNIKATIONSVORRICHTUNG ZUM AKTUALISIEREN VON SOFTWARE
PROCÉDÉ ET DISPOSITIF DE COMMUNICATION POUR LA MISE À JOUR D'UN LOGICIEL

(43) Date of publication of application: 26.10.2022
(73) Proprietor: TELEFONAKTIEBOLAGET LM ERICSSON (PUBL), 164 83 Stockholm (SE)
(72) Inventor: ARNGREN, Tommy, 954 42 SÖDRA SUNDERBY (SE); ENGLUND, Håkan, 226 48 LUND (SE); BERGSTRÖM, Daniel, 976 32 LULEÅ (SE)
(74) Representative: Ericsson
(86) International application number: PCT/EP2019/086360
(87) International publication number: WO 2021/121601

(56) References cited:
- US-A1- 2012 036 485
- US-A1- 2018 183 897

## Description

### Technical field

The present disclosure relates to a method for updating software and a communication device, capable of executing such a method.

### Background

Internet of Things (IoT) devices are used in a large variety of fields, including consumer products, such as e.g. products related to home automation, wearable technologies, devices enabling connected health and appliances with remote monitoring capabilities, and industrial products, applicable for e.g. manufacturing, monitoring and controlling operations. IoT devices may be configured with various advanced functions, but there is also a growing demand for simpler devices, capable of handling specific tasks with limited resources available. The latter devices are often referred to as constrained devices, i.e. battery driven devices that has limited processing and storage capabilities, which typically comprise a device interface, such as e.g. an inductive interface, adapted for data exchange and possibly also for energy harvesting; and a battery-powered processor, capable of executing specific software instructions. Such a device may be configured to perform periodic measurements via one or more sensors and possibly also to store the measured data in a memory of the device or at another location, accessible to the device.

US2018183897 refers to a method for enabling a M2M server, to interact with a M2M client, wherein the M2M server is capable of provisioning a policy on the M2MM client so that after completion of the provisioning the M2MM client will be able to make decisions and execute tasks autonomously, based on the provisioned policy, without requiring any further interaction or communication with the server. US2012036485 refers to a motion driven user interface for a mobile device which provides a user with the ability to cause execution of user interface input commands by physically moving the mobile device in space.

It is common practice to offer the option of performing a factory reset of an loT device, where, when applicable, configurations, set by a user or an owner of the device, are erased, and where, potentially, software of the device is reverted to a factory installed image, which is stored on the device, e.g. in a Read-Only Memory (ROM), or a write protected partition of a non-volatile memory.

Flash memories, such as e.g. embedded MultiMediaCards (eMMCs), normally support various types of write protection parts of the memory, such as e.g. permanent, temporary or power-on-reset write locking of a particular area or areas. In order to obtain a higher level of security, memory areas may also be password protected. A temporary write protected area can be opened up during runtime, while a power-on-reset write protected area can be configured, using a write once register, which can be locked during a boot process, but reset and opened up by performing a power-on cycle or a reset of the device. A permanently write protected area, however, can never be updated.

For loT devices, such as e.g. constrained devices which do not comprise any User Interface (Ul), it can be difficult to trigger specific software updating procedures.

If a software updating procedure, such as e.g. a factory reset image updating procedure involves security issues it may be critical to perform such an update procedure reset on a constrained device, as it may be vulnerable to attacks until it has been properly updated or upgraded. If a factory image or other software is stored in a permanently write protected non-volatile memory, such an updating procedure may not even be possible to execute.

### Summary

It is an aim of the present disclosure to provide a method, an arrangement and a computer program product which, to at least some extent, address one or more of the issues mentioned above.

More specifically, according to one aspect, there is provided a method in a communication device for executing a software updating process at the communication device according to claim 1.

The suggested method will enable a simple and user friendly, as well as secure, way of initiating a software updating procedure at a device which does not comprise any UI. Typically, the suggested method is usable at a constrained device, but also devices which are not considered to be constrained, or even devices which comprise a UI, may be adapted to apply the suggested method, since the procedure for initiating an updating procedure may be very user friendly and robust.

According to another aspect, a communication device for executing a software updating process is suggested, according to claim 12.

According to yet another embodiment a computer program product is suggested, where the computer program product comprise a non-transitory computer readable medium on which a computer program is stored, which, when run on the communication device, will cause the communication device to execute the suggested method.

### Brief description of drawings

Embodiments will now be described in more detail in relation to the accompanying drawings, in which:
Fig. 1 is a flowchart, illustrating a method for executing a software updating procedure according to one embodiment.
Fig. 2 is another flowchart, illustrating an alternative method for executing a software updating procedure according to another embodiment.
Fig. 3 is an overview of a system, comprising functional entities, capable of executing a software updating procedure of software of a communication device, forming part of the system.
Fig. 4a is a block scheme, illustrating a communication device, capable of executing a software updating procedure according to one embodiment.
Fig. 4b is another block scheme, illustrating a communication device, capable of executing a software updating procedure according to another embodiment.
Fig. 4c is another block scheme, illustrating a communication device, capable of executing a software updating procedure according to another aspect.

### Detailed description

In order to enable software updatability in a simple and predictable way, yet with at least a basic level of security, a method is suggested where a communication device, which may be e.g. a constrained communication device, such as e.g. an loT device, a Machine to Machine (M2M) device, a Machine Type Communication (MTC) device, or any other type of device which is adapted to determine a need for, initiate and execute a software updating procedure, based on some external manipulation of the environment of one or more sensors which are accessible to the device.

The suggested method is very suitable for manual, as well as automated execution of a software updating procedure. Especially in a situation with hundreds, or maybe even thousands, of devices, an automated procedure of the suggested software updating procedure may be preferred.

Although the suggested method is particularly suitable for initiating updating of software at a communication device which does not comprise any UI, it is however to be understood that the suggested method is also applicable for communication devices which do have a UI, but where the intention is e.g. to provide a reliable and easy method for updating software of a communication device according to an alternative approach which does not require a user to interact with the device via any UI. The suggested method may e.g. replace a physical reset button on a communication device, which has the disadvantage that it may be pressed unintentionally.

In situations where a communication device is placed in a rough environment, such as e.g. in an ironworks or underwater, where the device needs to be sealed the suggested method may also be suitable.

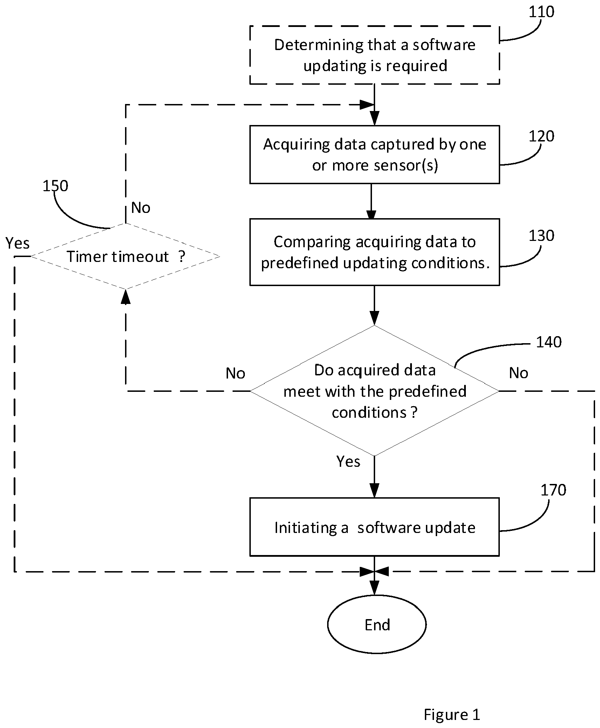

Referring to Fig. 1, a method is suggested where a communication device, as defined above, is acquiring data, captured by one or more sensors, which form part of the communication device or which is/are connected to the communication device via wire or wireless connection. Such a step is executed according to step 120 of Fig. 1. Such data may be captured on a regular or irregular basis, and the capturing may rely on a timing schedule, such that data is e.g. captured at regular time intervals, e.g. every 20 minutes or every third hour; at certain time instances during a 24 hour time interval, such as e.g. at 06:00 and 24:00, or when a respective measurable parameter exceeds or comes below a certain threshold value, thereby calling for attention at the communication device.

Alternatively, data may be captured according to a combination of conditions, where some or all conditions may be applicable at all times or in an optimized or scheduled manner, such that e.g. certain time based conditions become applicable if a threshold based condition has not triggered data capturing from a specific sensor when a pre-defined time interval has elapsed. It is also to be understood that according to one embodiment, data may be acquired by data being sent to the communication device from a sensor, without requiring any intervention from the communication device, whereas according to another embodiment, data is being acquired from a sensor on request from the device.

If any of the approaches mentioned above is applied, data, relevant for the mentioned method can be captured at any time, providing that predetermined conditions for capturing the data have been fulfilled with or without requiring any intervention for initiating the acquiring of data from the device. According to the invention the initiation of the suggested method and acquiring of data, is triggered at a preceding, step 110, where a function of the communication device, which may be referred to as an analysis function, or a software updating analysis function, determines that a software updating procedure is required. Such a determination may comprise one or more consideration, already mentioned above, such as e.g. expiry of a time interval, indicating that the total runtime calls for a software update, or expiry of a time interval, without receiving any sensor data. Such a determination may alternatively be based on more or less complex analysis of the functioning of the device, such as e.g. based on unpredictable outcome of one or more executable functions of the communication device, such as e.g. when processing and analyzing sensor data, captured for conventional purposes.

According to one embodiment, detection or suspicion of specific security issues related to certain software of a communication device, such as e.g. presence of data virus may trigger the device to initiate the suggested method. According to another embodiment, repeated occurrence of a specific error message may trigger initiation of the suggested method. According to yet another embodiment, a sensor which is considered by the communication device to be faulty may trigger execution of the suggested method at the communication device.

Once data has been acquired by the communication device it is compared to predefined updating conditions, as indicated with step 130. The predetermined conditions may-comprise a threshold, a specific pattern of the captured data or a combination thereof.

According to another step 140, it is determined if the acquired data, compared at step 130, meet with the predefined updating conditions. The conditions are specifically selected such that captured data will not fall within a normal range without the environment of a respective sensor being manipulated. More specifically, in order to meet with the conditions, the environment need to be manipulated, either manually or automatically. This means that under normal conditions, data acquired from one or more sensors will not meet with the predefined conditions associated with the method described herein. Instead the described method will, under those circumstances, be terminated, as indicated with the "No" branch pointing to the right in the figure, which is applicable if no timer or counter is applied by the method.

Alternatively, in case an optional timer is applied, the timer is started at step 130, i.e. upon comparing the first acquired data. If the acquired data does not meet the predefine condition in step 140, it is determined if the timer has expired in a subsequent step 150, and the method is to terminate, or if time still permits further data to be acquired, whereas the method instead continues from step 120. As long as the timer has not expired, steps 120-140 are repeated, allowing data to be acquired for the duration of the time interval of the timer, whereas when the timer expires, without the acquired data meeting with the predefined conditions, the suggested method is terminated.

Although not shown in the figure, the timer may alternatively be replaced by a counter, where, instead of applying a certain time limit, data may be captured a predefined number of times, and if data meet with predefined conditions for any of the captured data sets, a software updating procedure is triggered.

Manipulated data is to be construed as meaning that acquired data has been manually or automatically forced to fall within a specific interval, pattern or in a specific way in relation to a threshold value, contrary to data which is fully representative of the environment in which the respective is located, where the environment has not been, at least intentionally, affected, neither manually, nor automatically.

Environment is to be construed as one or both of the air surrounding, and effecting the data acquired from a sensor, or a device on which the sensor is attached, which may be the actual communication device or another device which is connected to the communication device. When the environment of a sensor is the surrounding air, the air may e.g. be manipulated by warming it up if e.g. a temperature sensor is used for measuring the air temperature, whereas in case a device comprising a pressure sensor, the device may e.g. be manipulated by a user pressing the device and the pressure sensor together.

If the acquired data meet with the predefined conditions, a software updating procedure is initiated by the device, as indicated with step 170. According to one embodiment, the communication device requests software update from one or more external servers, typically by transmitting a request to the server in an out-of-band communication between the server and the communication device, after which the software is transmitted to the communication device 300. According to one possible embodiment, another communication device, storing updatable software, acts as a server, from which the communication device can request the software.

According to another embodiment, an initiation of a software updating procedure will involve that software, such as e.g. a specific software image, available at a storage of the communication device itself is acquired and used in a software updating procedure, executed at the communication device.

Depending on the severity of the reason for requiring software update, steps 130-170 may be executed by conventional functionality of the communication device or by a specific function or circuitry, which may be referred to as a secure function or circuitry, where a secure function or circuitry is isolated from the remaining functionality of the device, so that it is still able to operate also when the remaining functionality of the device does not operate in an adequate or predicted way. The secure function or circuitry may be controlled by the same processor as the processor which is controlling the conventional functionality of the communication device, or it may be controlled by another, separate processor, thereby increasing the chances of successful execution of the mentioned method also is situations where the processor managing the conventional functionality of the communication device has stopped working.

The functionality of the communication device may, according to one embodiment, be arranged so that data acquired for determining if it meet with the predefined conditions is always processed by the same functionality as the one handling data, which is captured for conventional sensor data processing.

According to another embodiment the communication device has a primary function and a secondary function, where the primary function is limited to handling data captured by a communication device, operating under normal conditions, i.e. without initiating any software updating procedure according to any of the embodiments described herein, whereas the second function is activated and executed when it is found that captured data meet with predefined conditions for initiation of the suggested software updating procedure. The separation of a first and a second function may provide a way of separating functionality to be executed for conventional sensor capturing processing from functionality to be executed when a software updating is required.

Irrespective of whether or not the communication device has one single function for acquiring sensor data, or a primary and a secondary function, as suggested above, one or more physical quantities, which are suitable for manipulation, is applied, together with suitable, associated condition settings, which may refer to one or more of e.g. temperature, pressure, acceleration force, backscattering coefficients, angle, rotation, motion, vibrations, length or light. All of the mentioned physical quantities are suitable for being measured by a sensor when the environment of the sensor is being manipulated so that a value within a wanted range, which differs from the range to expect in an un-manipulated environment, can be acquired.

Suitable sensors may be connected to, attached to, or integrated with the communication device. A temperature sensor may e.g. be arranged to capture the temperature of its environment, i.e. the air surrounding it, a pressure sensor may capture the pressure exposed to a device on which the sensor is attached, an accelerometer may capture an acceleration force exposed to a device on which the accelerometer is arranged, a radar equipment may capture backscattering coefficients associated with a device on which the radar equipment is arranged, an angel measuring sensor may capture an angle of a device on which the angle measuring sensor is arranged, a rotation sensor may capture a rotation of a device on which the rotation sensor is arranged, a motion sensor may capture motion of a device on which the rotation sensor is arranged, a vibration sensor may capture vibration of a device on which the vibration sensor is arranged, a length sensor, which may e.g. be located in a sonar, may capture a specific length, and a light sensor, such as e.g. a photocell, may capture light in the environment of the sensor.

When applying manipulated sensor values, a temperature sensor may e.g. be placed in a location where the temperature of the environment is typically varying within the range of -10 °C - +30 °C, but not above 50 °C. By applying a threshold at 50 °C, setting a rule for initiation of a software update procedure to when a temperature is captured above 50 °C and by manipulating the environment of the sensor by warming up the air close to the sensor so that it reach above 50 °C, it will be possible to trigger a software update at the communication device to be initiated at such an occasion.

According to another embodiment, light pulses may e.g. be flashed at a light sensor so that a light pattern is recognized as a pattern which triggers a software update procedure at a communication device.

Alternatively, two sensors, capable of measuring different physical quantities, may be combined so that e.g. data from an acceleration force sensor and an angle sensor may capture data indicative of a user shaking a communication device according to a certain instruction or pattern when the angle sensor at the same time is being tilted above a certain angle. The latter embodiment is particularly suitable when both sensors are attached to the communication device, but one sensor may alternatively be attached to the device while another senor is connected to it. By combining different sensors, e.g. as suggested, an even more robust procedure for when to actually initiate a software update may be achieved, since the specific combination of manipulations of the various sensors may typically be very difficult to execute in the specified combination, without knowing the required combination of conditions in advance.

In addition to any of the approaches mentioned above, the mentioned conditions may be applied to consider data captured from one or more sensors, suitable for capturing manipulated data in combination with data captured from one or more sensors suitable for capturing un-manipulated data.

Physical quantities suitable to be captured as un-manipulated data may comprise e.g. geographical coordinates, distance, orientation, biometrics or visual sensor data, where e.g. a GPS may be used for capturing geographical coordinates, an ultrasonic sensor may be used for capturing distance data, an accelerometer may be used for capturing data indicative of an orientation, a biometric fingerprint reader may capture a fingerprint, or visual sensor data, which may include e.g. digital pictures, which may e.g. be captured by a digital camera.

By combining manipulated data, such as e.g. motion, captured e.g. with a motion sensor with un-manipulated data, such as e.g. geographical coordinates, captured with e.g. a GPS, it will be possible to trigger an updating procedure of software e.g. when a communication device is shaken according to a certain predefined pattern when, at the same time, located at a certain geographical location, such as e.g. at a car service station, where the respective software update may be required and initiated by a person being aware of the required pressure pattern, which may e.g. only be known to authorized personal of the service station.

In another scenario a communication device may be shaken or squeezed according to a certain pattern in combination with exposing a fingerprint of a user to a fingerprint sensor, where the fingerprint sensor may be configured to sense any human fingerprint or identify a specific fingerprint. In one alternative scenario the device may be shaken in combination with covering a light sensor with the shaking hand of the user, i.e. the combination of a shaking pattern and no light exposed to the light sensor will initiate a software updating procedure.

By combining capturing of one or more specific physical quantities, suitable for manipulation with capturing of e.g. geographical coordinates, the suggested method is not only very suitable for initiating a software update procedure for a constrained device, but also for devices, for which a specific software update is to be executed only when the communication device is at a certain location, but once at that location it shall be easy for a user, who is aware of the specific pattern, to initiate the update by manipulating the environment of a manipulatable sensor.

Due to the fact that a specific pattern may be required for triggering a specific software updating procedure, different patterns may be applicable for updating different parts, or areas of a memory. Alternatively, or additionally, different software versions may be selected depending on the applied pattern, which is triggering the software updating procedure.

Manipulation of an environment in which there is one or more sensors may be executed manually, so that e.g. a pressure sensor is being squeezed or the environment of a temperature sensor is being warmed up. Manual manipulation may come in handy e.g. if one or a few communication devices are to be updated. However, in case of a large number of communication devices that need to be updated at more or less the same time, an automated process may be more appropriate. The latter use case may, especially for communication devices located in remote places, involve e.g. drones or land-based or underwater-based robots that are sent out to the relevant one or more sensors to manipulate the environment of these one or more sensors in a manner which will trigger a software updating procedure to be initiated at the communication devices.

In case one or a few sensors are to be used only for sensing manipulated data, this or these sensors may be connected to a plurality of communication devices. Thereby, a manipulation of the environment of only one or a few sensors may, with a relatively limited effort, trigger a software updating procedure at a plurality of communication devices.

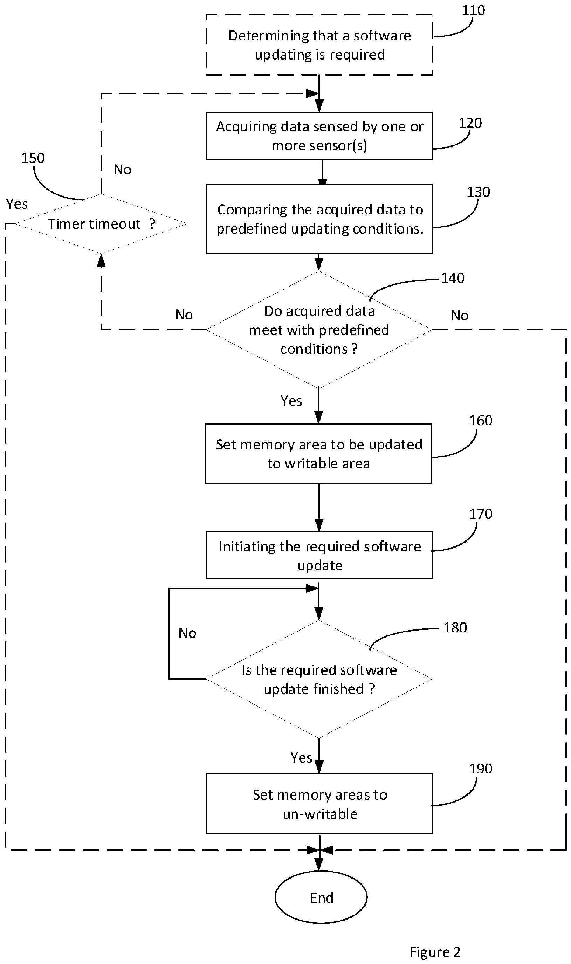

In order to increase the security with respect to the software updating procedure, certain relevant memory areas of a communication device may be adapted accordingly when software updating is to be executed at the device, as well as when the process has been completed. Fig. 2 discloses a method according to an alternative embodiment, which, to a large extend, corresponds to the method as disclosed above with reference to Fig. 1. What differs from the method of Fig. 1 are steps 160, 180 and 190. More specifically, once it has been determined, in step 140, that acquired data meet with predefined conditions, the initiating step 170 is preceded by another step 160, where one or more relevant memory areas, about to be updated, are set to writeable area(s), thereby opening up for updating of these memory areas, which would otherwise have been write protected. The writeable area(s) is/are then updated, as indicated with step 170, where the mentioned areas remain writeable as long as the updating procedure commence, as indicated with step 180. Once the software updating procedure has been completed, the mentioned area(s) is/are set back to un-writable or write protected areas(s), as indicated with step 190, and the suggested method is completed.

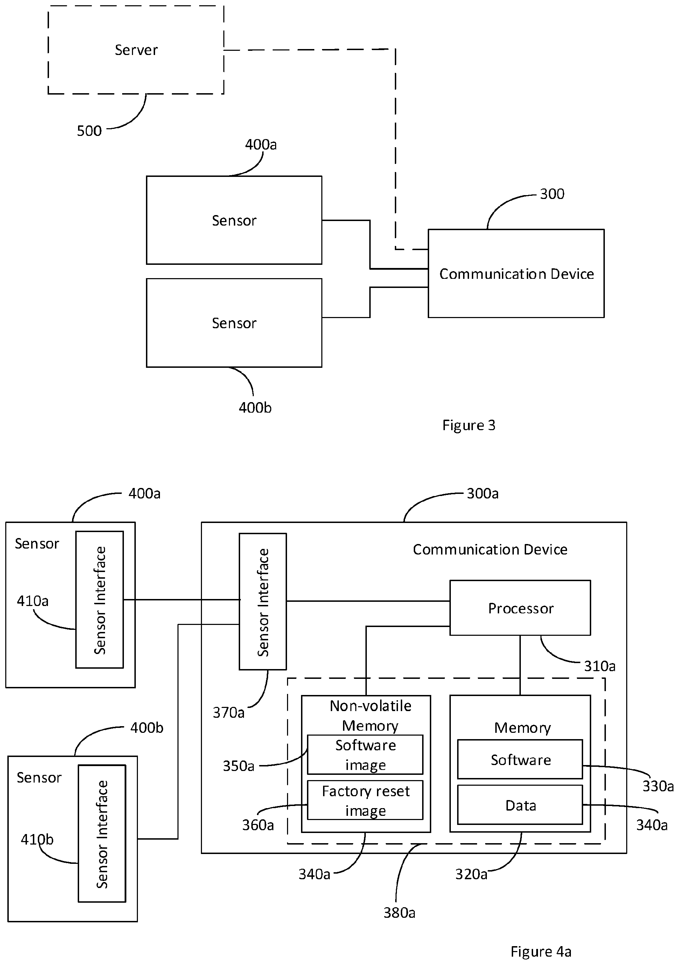

Fig. 3 is giving an overview of a system in which the method mentioned above can be executed. A communication device 300 is connected to two sensors 400a,400b, from which data can be acquired and evaluated accordingly. As mentioned above, the sensors 400a,400b may be any type of sensors which can be adapted for sensing manipulated and/or unmanipulated data. Although there are two sensors indicated in the figure it is to be understood that the communication device 300 may alternatively be connected to one single sensor or to a plurality of sensors. As already mentioned above, one single sensor may be connected to a plurality of communication devices. As an alternative to being connected to the communication device 300, one or more of the sensors 400a,400b may form an integral part of the communication device 300, or sensors may be arranged as a combination of integrated and stand-alone sensors.

The communication device 300 of Fig. 3 may also by connected to one or more servers, here represented by server 500, capable of providing updated software during an updating procedure. Alternatively, or in addition, a server 500 may be configured to receive data provided from the communication device, e.g. when it is operating in a conventional manner, such as e.g. according to a primary function. Although the figure only comprises one server 500 it is to be understood that the communication device 300 may be connected to a plurality of servers 500, or devices having software updating capabilities or one or more other communication devices, acting as servers. Communication between the communication device 300 and the server 500, as well as the sensors 400a,400b may be executed via any type of available wireless or wired communication technology, or a combination thereof. In case software to be updated is already accessible at the communication device, no interaction with any server will be required.

A communication device is, in the present context, to be referred to as a device which comprise, or have access to, at least one sensor, which is adapted to communicate with one or more other devices and a communication network, such as e.g. a network operable according to a network technology compliant with e.g. one or more of 2G, 3G, 4G, 5G, or of a short range technology, such as e.g. Zigbee, Bluetooth, Wi-Fi, Near-Filed Communication (NFC) or Ultra-wideband (UWB).

A communication device adapted to operate according to any of the embodiments described herein may, according to one embodiment, be configured as indicated in Fig. 4a. Fig. 4a comprises one or more processors, here represented by processor 310a, which is connected to a memory 320a, storing software 330a, adapted to allow the communication device 300a to execute certain functional tasks. The memory 320a also comprise memory areas 340a, adapted to store data, such as e.g. data captured from one or more sensors 400a,400b. In addition to memory 320a, the processor also comprises a non-volatile memory 340a, which is comprising memory areas for storing one or more software images, here represented by software image 350a, and/or one or more factory reset images, here represented by factory image 360a, or any other software, stored at the communication device 300a, for the purpose of serving as updatable software. The processor 310a can be any combination of one or more of e.g. a suitable central processing unit (CPU), multiprocessor, microcontroller, digital signal processor (DSP).

The communication device 300a also comprises at least one sensor interface, here represented by sensor interface 370a. Typically, the sensor interface 370a comprise a cache, or a separate cache (not shown) is connected to the sensor interface 370a, so that data acquired from a sensor can be cached at the communication device 300a before it is determined whether it meet with predetermined conditions or not. In Fig. 4a, the communication devoice 300a is connected to two sensors 400a,400b, where each sensor 400a,400b, also comprise a respective sensor interface 410a,410b.

The communication device 300a may also comprise a computer program product, 380a, comprising a non-transitory computer readable medium on which a computer program is stored, which when run on the communication device 300a will cause the communication device 300a to execute a method according to any of the methods suggested herein.

Although not indicated in the figure, the communication device 300a typically also comprise further functional circuitry or functions, such as e.g. power source, further memory areas, such as e.g. Read Only Memory (ROM) and an interface for communication with a server, if applicable. Such functionality has been omitted from the figure in order not to obscure the mechanism, relevant for the understanding of the claimed technical solution.

The communication device 300a of fig. 4a, capable of initiating and executing a software updating process, is configured to acquire data captured by at least one sensor 400a,400b, which is/are accessible to the communication device 300a. It is also configured to compare the acquired data to predefined conditions for initiating a software updating process and to initiate the software updating process at the communication device 300a when it has determined that the acquired data meet with predefined conditions for updating software at the communication device 300a. According to one alternative embodiment, the communication device 300a may also be configured to initially determine that software updating procedure of the device is required, i.e. to initiate the suggested method, rather than determining that an updating procedure is required based on that predefined conditions are fulfilled for captured data.

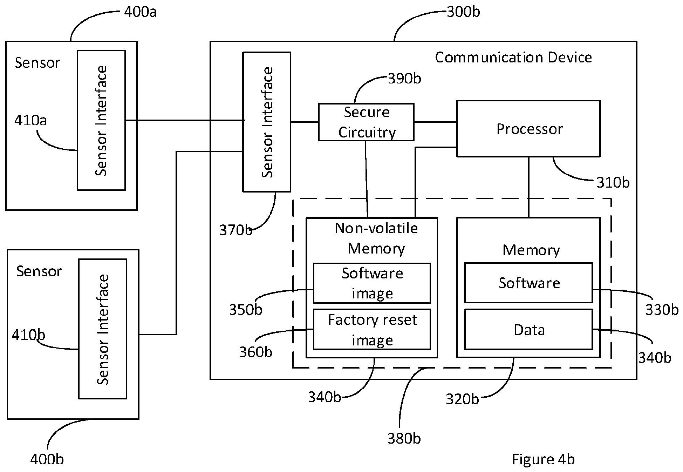

Fig. 4b is illustrating a communication device 300b according to another embodiment, where communication device 300b is very similar to the communication device 300a of Fig. 4a, with the exception that there is specific circuitry arranged between the sensor interface 370b and the non-volatile memory 340b, which is refereed to as secure circuitry 390b, or a secure function. The secure circuitry 390b refers to circuitry which is configured to be triggered to set one or more specific memory area(s) to writeable, i.e. in an unprotected mode when a software updating procedure is about to commence and set the relevant one or more memory area(s) back to read only, i.e. to protected mode, once the initiated updating procedure is considered to be completed.

Irrespective of if a communication device is provided with secure circuitry or not, the communication device may be configured to execute a primary and a secondary function where a primary function is adapted to capture data from at least one sensor, such as e.g. sensor 400a, where the captured data provides a representation of the environment in which the respective sensor is located, or, in other words, data captured by a sensor in a conventional way, and a secondary function is adapted to capture data from at least one sensor, such as e.g. sensor 400b, where the captured data provides a potential trigger for the software updating process, i.e. the data is captured for the purpose of triggering a software updating procedure when conditions for such a procedure is considered to be fulfilled. The processor 310b of the communication device 300b therefore receives data to be handled by the first function without requiring any interaction from any secure circuitry 380c, if applied, whereas the secondary function is configured to process data recognized as a trigger for a software updating procedure. With secure circuitry applied, sensor data acquired by the processor 310b of the communication device 300b, which is to be handled in a conventional manner, i.e. which is not intended to initiate a software updating procedure will be forwarded to the processor 310b in a transparent manner.

The communication device 300a,300b described above according to any of Fig. 4a or 4b may be arranged as a device comprising at least one processor 31 0a, 310b, and memory 320a,320b, comprising computer readable instructions 320a,320b, which, when executed by the processor 31 0a,310b, causes the communication device 300a,300b to acquire data captured by at least one sensor 410a,410b which is accessible to the communication device 300a,300b, compare the acquired data to predefined conditions for initiating a software updating process, initiate the software updating process at the communication device 300a,300b in response to determining, by the communication device 300a,300b, that the acquired data meet with predefined conditions for updating software at the communication device 300a,300b.

The communication device 300a,300b may alternatively also comprise computer readable instructions 320a,320b which, when executed by the processor 320a,320b, causes the communication device 300a,300b to execute a method according to any of the embodiments described herein.

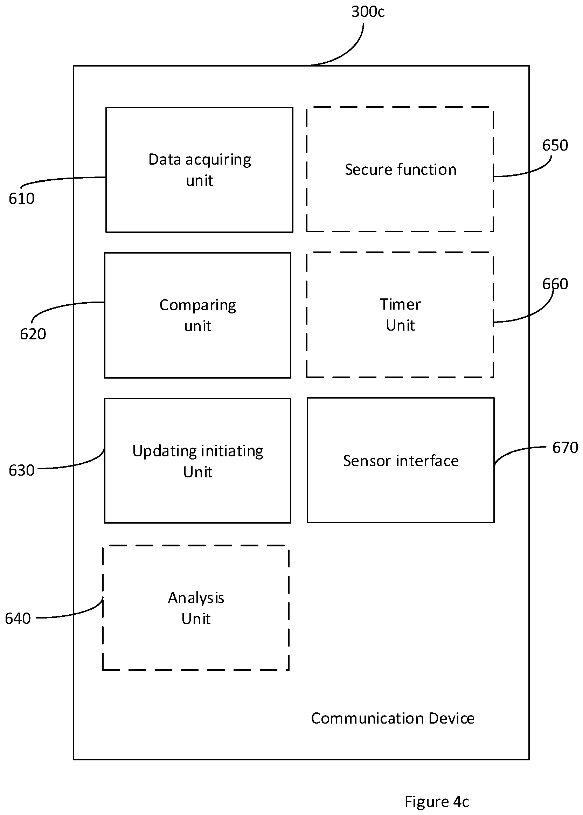

According to another aspect, a communication device 300c for executing a software updating process as suggested herein is described below with reference to Fig. 4c. The communication device 300c comprise a data acquiring unit 610, configured to acquire data captured by at least one sensor which is accessible to the communication device 300c via a sensor interface 670, corresponding to step 120 of Fig. 1 and 2; a comparing unit 620, configured to compare the acquired data to predefined conditions, for initiating a software updating process, corresponding to step 130 in Fig. 1 and 2; an updating initiation unit 630 configured to initiate the software updating process at the communication device 300c in response to determining, by the comparing unit 620 that the acquired data meet with predefined conditions for updating software at the communication device 300c, corresponding to step 170 of Fig. 1 and 2. Optionally, the communication unit 300c may also comprise a secure function 650 or unit, corresponding to the secure circuitry 390b of Fig. 4b, configured to handle data captured from one or more sensors in a secure manner, as described above. Furthermore, the communication unit 300c may also comprise a timer unit 660 or a counter, configured to determine how long or how many times the communication device 300c is to receive sensor data. Optionally, the communication device 300c may comprise also an analysis unit 640, capable of determining that a software updating procedure is required, and, thus, to initiate the method as disclosed herein, corresponding to step 110 of Fig 1 or 2.

Further functional units which is normally acquired in a communication device capable of operating as suggested herein, such as e.g. a power regulating unit and communication unit, which are not necessary for the understanding of the functionality as suggested herein, have been omitted for simplicity reasons.

## Claims

1. A method in a communication device for executing a software updating process within the communication device, the method comprising:
- initiating (110) a data capturing procedure, using at least one sensor which is accessible to the communication device, in response to determining, based on internal analysis, without considering any user interaction, that software updating is required;
- comparing (130) data acquired during the initiated data capturing procedure to predefined conditions for initiating a software updating process;
- initiating (170) the software updating process within the communication device in response to determining (140), by the communication device, during the comparing (130), that the environment of the at least one sensor or the at least one sensor has been manipulated such that the acquired data is forced_to fall within a specific interval, pattern or in a specific way in relation to a threshold value.

2. The method according to claim 1, wherein the initiating (170) of the software updating at the communication device is executed by any of a secure function or a secure circuit of the communication device, where the secure function or circuitry is a function or circuitry isolated from the remaining functionality of the device, thereby allowing the secure function or secure circuit, isolated from the remaining functionality of the device, to operate also when the remaining functionality of the device does not operate in an adequate or predicted way.

3. The method according to any of the preceding claims, wherein the communication device comprises:
- a primary function for capturing data from at least one sensor, where the captured data provides a representation of the environment in which the respective sensor is located, and
- a secondary function for capturing data from at least one sensor, where the captured data provides a potential trigger for the software updating process.

4. The method according to any of the preceding claims, wherein the captured data comprise data indicative of at least one of: temperature, pressure, acceleration force, backscattering coefficients, angle, rotation, motion, vibrations length or light.

5. The method according to any of the preceding claims, wherein the captured data is acquired from a combination of sensors, wherein the combination of sensors is capturing different categories of data.

6. The method according to claim 5, wherein data captured from a first sensor comprises non-manipulated data and data captured from a second sensor comprises manipulated data, and wherein the predefined conditions comprise conditions for considering the un-manipulated and the manipulated data in combination.

7. The method according to claim 6, wherein the captured, manipulated data comprise data captured by a sensor indicative of any of: temperature, pressure, acceleration force, backscattering coefficients, angle, rotation, motion, vibrations, length or light, and wherein the captured, non-manipulated data comprise data captured by a sensor indicative of any of: geographical coordinates, distance, orientation or visual sensor data.

8. The method according to any of the preceding claims, wherein the updating of the software comprises updating of at least one part of software of the communication device, wherein the at least one part of software is determined by the predefined conditions met by the acquired data.

9. The method according to claim 8, wherein at least one write-protectable memory area associated with the software to be updated is set (160) to writable area.

10. The method according to claim 9, wherein the at least one write-protectable memory area associated with the software to be updated is set (190) to un-writable area after the required software updating has been completed.

11. The method according to any of the preceding claims, wherein acquired data is compared to the predefined conditions until any of the following occasions has appeared:
- a timer timeout (150) has occurred, or
- the communication device has acquired data from at least one specific sensor a predefined number of times.

12. A communication device (300a,300b) for executing a software updating process within the communication device (300a,300b), the communication device (300a,300b) being configured to:
- initiate a data capturing procedure using at least one sensor which is accessible to the communication device (300a,300b), in response to determining, based on internal analysis, without considering any user interaction, that software updating is required;
- compare data acquired data during the initiated data capturing procedure to predefined conditions for initiating a software updating process.
- initiate the software updating process within the communication device (300a,300b) in response to determining, by the communication device (300a,300b), during the comparing (130), that the environment of the at least one sensor or the at least one sensor has been manipulated such that the acquired data is forced to_fall within a specific interval, pattern or in a specific way in relation to a threshold value, wherein the predefined conditions comprise that the acquired data has been manipulated in a specific way in relation to a reference value or interval.

13. The communication device (300a,300b) according to claim 12, wherein the communication device (300a,300b) is further configured to execute the initiation of the software updating by any of a secure circuitry (380c) or a secure function of the communication device (300a,300b,300c), where the secure function or circuitry is a function or circuitry isolated from the remaining functionality of the device, thereby allowing the secure function or secure circuit, isolated from the remaining functionality of the device, to operate also when the remaining functionality of the device does not operate in an adequate or predicted way.

14. The communication device (300a,300b) according to any of claims 12-13, wherein the communication device (300a,300b) is configured to apply:
- a primary function for capturing data from at least one sensor (400a,400b), where the captured data provides a representation of the environment in which the respective sensor (400a,400b) is located, and
- a secondary function for capturing data from at least one sensor (400a,400b), where the captured data provides a potential trigger for the software updating process.

15. The communication device (300a,300b) according to any of claims 12-14 14-18, wherein the captured data comprise data indicative of at least one of: temperature, pressure, acceleration force, backscattering coefficients, angle, rotation, motion, vibrations length or light.

16. The communication device (300a,300b) according to any of claims 12-15, wherein the communication device (300a,300b) is configured to capture data acquired from a combination of sensors (400a,400b), wherein the combination of sensors (400a,400b) is capturing different categories of data.

17. The communication device (300a,300b) according to claim 16, wherein the communication device (300a,300b) is configured to capture non-manipulated data from a first sensor (400a) and manipulated data from a second sensor (400b), and to apply predefined conditions which comprise conditions for considering the un-manipulated and the manipulated data in combination.

18. The communication device (300a,300b) according to claim 17, wherein the communication device (300a,300b) is configured to capture manipulated data comprising data captured by a sensor (400b) indicative of any of: temperature, pressure, acceleration force, backscattering coefficients, angle, rotation, motion, vibrations, length or light, and to capture non-manipulated data comprising data captured by a sensor (400a) indicative of any of: geographical coordinates, distance, orientation or visual sensor data.

19. The communication device (300a,300b) according to any of claims 12-18, wherein the communication device (300a,300b) is further configured to update at least one part of software, wherein the at least one part of software is determined by the predefined conditions met by the acquired data.

20. The communication device (300a,300b) according to claim 19, wherein the communication device (300a,300b) is configured to set at least one write-protectable memory area associated with the software to be updated to writable area.

21. The communication device (300a,300b) according to claim 20, wherein the communication device (300a,300b) is configured to set the at least one write-protectable memory area associated with the software to be updated to un-writable area after the required software updating has been completed.

22. The communication device (300a,300b) according to any of claims 12-21, wherein the communication device (300a,300b) is configured to compare the acquired data to the predefined conditions until any of the following occasions has appeared:
- a timer timeout (150) has occurred, or
- the communication device communication device (300a,300b) has acquired data from at least one specific sensor (400a,400b) a predefined number of times.

23. A computer program product (380a, 380b), comprising a non-transitory computer readable medium (340a, 340b) on which a computer program (350a,360a, 350b,360b) is stored, which when run on the communication device (300a,300b) will cause the communication device (300a,300b) to execute a method according to any of claims 1-11.

## Patentansprüche

1. Verfahren in einer Kommunikationsvorrichtung zum Ausführen eines Software-Aktualisierungsprozesses innerhalb der Kommunikationsvorrichtung, wobei das Verfahren Folgendes umfasst:
- Einleiten (110) eines Datenaufnahmevorgangs unter Verwendung mindestens eines Sensors, auf den die Kommunikationsvorrichtung Zugriff hat, als Reaktion auf Bestimmen, dass eine Software-Aktualisierung erforderlich ist, auf Grundlage einer internen Analyse, ohne eine jegliche Benutzerinteraktion zu berücksichtigen;
- Vergleichen (130) von Daten, die während des eingeleiteten Datenaufnahmevorgangs erfasst wurden, mit vordefinierten Bedingungen zum Einleiten eines Software-Aktualisierungsprozesses;
- Einleiten (170) des Software-Aktualisierungsprozesses innerhalb der Kommunikationsvorrichtung durch die Kommunikationsvorrichtung, während des Vergleichens (130), als Reaktion auf Bestimmen (140), dass die Umgebung des mindestens einen Sensors oder der mindestens eine Sensor derart, dass die erfassten Daten dazu gezwungen werden, in ein spezifisches Intervall oder Muster zu fallen, oder auf gewisse Weise in Bezug auf einen Schwellenwert manipuliert wurde.

2. Verfahren nach Anspruch 1, wobei das Einleiten (170) der Software-Aktualisierung an der Kommunikationsvorrichtung durch ein beliebiges von einer sicheren Funktion oder einem sicheren Schaltkreis der Kommunikationsvorrichtung ausgeführt wird, wobei die sichere Funktion oder Schaltung eine Funktion oder Schaltung ist, die von der übrigen Funktionalität der Vorrichtung isoliert ist, wodurch ermöglicht wird, dass die sichere Funktion oder der sichere Schaltkreis, die/der von der übrigen Funktionalität der Vorrichtung isoliert ist, auch dann betrieben wird, wenn die übrige Funktionalität der Vorrichtung nicht auf eine angemessene oder vorhergesagte Weise betrieben wird.

3. Verfahren nach einem der vorhergehenden Ansprüche, wobei die Kommunikationsvorrichtung Folgendes umfasst:
- eine Primärfunktion zum Aufnehmen von Daten von mindestens einen Sensor, wobei die aufgenommenen Daten eine Darstellung der Umgebung bereitstellen, in der sich der jeweilige Sensor befindet, und
- eine Sekundärfunktion zum Aufnehmen von Daten von mindestens einem Sensor, wobei die aufgenommenen Daten einen möglichen Auslöser für den Software-Aktualisierungsprozess bereitstellen.

4. Verfahren nach einem der vorangehenden Ansprüche, wobei die aufgenommenen Daten Daten umfassen, die mindestens eines von Folgenden angeben: einer Temperatur, einem Druck, einer Beschleunigungskraft, von Rückstreuungskoeffizienten, einem Winkel, einer Drehung, einer Bewegung, von Schwingungen, einer Länge oder von Licht.

5. Verfahren nach einem der vorangehenden Ansprüche, wobei die aufgenommenen Daten aus einer Kombination von Sensoren erfasst werden, wobei die Kombination von Sensoren unterschiedliche Kategorien von Daten aufnimmt.

6. Verfahren nach Anspruch 5, wobei von einem ersten Sensor aufgenommenen Daten nicht manipulierte Daten umfassen und von einem zweiten Sensor aufgenommene Daten manipulierte Daten umfassen und wobei die vordefinierten Bedingungen Bedingungen zum Berücksichtigen der nicht manipulierten und der manipulierten Daten in Kombination umfassen.

7. Verfahren nach Anspruch 6, wobei die aufgenommenen manipulierten Daten durch einen Sensor aufgenommene Daten umfassen, die ein beliebiges von Folgenden angeben: einer Temperatur, einem Druck, einer Beschleunigungskraft, von Rückstreuungskoeffizienten, einem Winkel, einer Drehung, einer Bewegung, von Schwingungen, einer Länge oder von Licht, und wobei die aufgenommenen nicht manipulierten Daten durch einen Sensor aufgenommene Daten umfassen, die ein beliebiges von Folgenden angeben: von geographischen Koordinaten, einer Entfernung, einer Ausrichtung oder von visuellen Sensordaten.

8. Verfahren nach einem der vorhergehenden Ansprüche, wobei das Aktualisieren der Software Aktualisieren mindestens eines Teils der Software der Kommunikationsvorrichtung umfasst, wobei der mindestens eine Teil der Software durch die vordefinierten Bedingungen bestimmt ist, die durch die aufgenommenen Daten erfüllt werden.

9. Verfahren nach Anspruch 8, wobei mindestens ein schreibgeschützter Speicherbereich, welche der zu aktualisierenden Software zugeordnet ist, in einen beschreibbaren Bereich eingestellt (160) wird.

10. Verfahren nach Anspruch 9, wobei der mindestens eine schreibgeschützte Speicherbereich, welche der zu aktualisierenden Software zugeordnet ist, in einen nicht beschreibbaren Bereich eingestellt (190) wird, nachdem die erforderliche Software-Aktualisierung abgeschlossen wurde.

11. Verfahren nach einem der vorhergehenden Ansprüche, wobei die aufgenommenen Daten mit den vordefinierten Bedingungen verglichen werden, bis ein beliebiges der folgenden Ereignisse eingetreten ist:
- eine Zeitgeberzeitüberschreitung (150) ist erfolgt oder
- die Kommunikationsvorrichtung hat Daten von mindestens einem spezifischen Sensor eine vordefinierte Anzahl von Malen erfasst.

12. Kommunikationsvorrichtung (300a, 300b) zum Ausführen eines Software-Aktualisierungsprozesses innerhalb der Kommunikationsvorrichtung (300a, 300b), wobei die Kommunikationsvorrichtung (300a, 300b) zu Folgendem konfiguriert ist:
- Einleiten eines Datenaufnahmevorgangs unter Verwendung mindestens eines Sensors, auf den die Kommunikationsvorrichtung (300a, 300b) Zugriff hat, als Reaktion auf Bestimmen, dass eine Software-Aktualisierung erforderlich ist, auf Grundlage einer internen Analyse, ohne eine jegliche Benutzerinteraktion zu berücksichtigen;
- Vergleichen von Daten, die während des eingeleiteten Datenaufnahmevorgangs erfasst wurden, mit vordefinierten Bedingungen zum Einleiten eines Software-Aktualisierungsprozesses;
- Einleiten des Software-Aktualisierungsprozesses innerhalb der Kommunikationsvorrichtung (300a, 300b) durch die Kommunikationsvorrichtung (300a, 300b), während des Vergleichens (130), als Reaktion auf Bestimmen, dass die Umgebung des mindestens einen Sensors oder der mindestens eine Sensor derart, dass die erfassten Daten dazu gezwungen werden, in ein spezifisches Intervall oder Muster zu fallen, oder auf gewisse Weise in Bezug auf einen Schwellenwert manipuliert wurde, wobei die vordefinierten Bedingungen umfassen, dass die erfassten Daten auf eine spezifische Weise in Bezug auf einen Referenzwert oder ein Intervall manipuliert wurden.

13. Kommunikationsvorrichtung (300a, 300b) nach Anspruch 12, wobei die Kommunikationsvorrichtung (300a, 300b) ferner dazu konfiguriert ist, die Einleitung der Software-Aktualisierung durch ein beliebiges von einem sicheren Schaltkreis (380c) oder einer sicheren Funktion der Kommunikationsvorrichtung (300a, 300b, 300c) auszuführen, wobei die sichere Funktion oder Schaltung eine Funktion oder Schaltung ist, die von der übrigen Funktionalität der Vorrichtung isoliert ist, wodurch ermöglicht wird, dass die sichere Funktion oder der sichere Schaltkreis, die/der von der übrigen Funktionalität der Vorrichtung isoliert ist, auch dann betrieben wird, wenn die übrige Funktionalität der Vorrichtung nicht auf eine angemessene oder vorhergesagte Weise betrieben wird.

14. Kommunikationsvorrichtung (300a, 300b) nach einem der Ansprüche 12-13, wobei die Kommunikationsvorrichtung (300a, 300b) dazu konfiguriert ist, Folgendes anzuwenden:
- eine Primärfunktion zum Aufnehmen von Daten von mindestens einen Sensor (400a, 400b), wobei die aufgenommenen Daten eine Darstellung der Umgebung bereitstellen, in der sich der jeweilige Sensor (400a, 400b) befindet, und
- eine Sekundärfunktion zum Aufnehmen von Daten von mindestens einem Sensor (400a, 400b), wobei die aufgenommenen Daten einen möglichen Auslöser für den Software-Aktualisierungsprozess bereitstellen.

15. Kommunikationsvorrichtung (300a, 300b) nach einem der Ansprüche 12-14, wobei die aufgenommenen Daten Daten umfassen, die mindestens eines von Folgenden angeben: einer Temperatur, einem Druck, einer Beschleunigungskraft, von Rückstreuungskoeffizienten, einem Winkel, einer Drehung, einer Bewegung, von Schwingungen, einer Länge oder von Licht.

16. Kommunikationsvorrichtung (300a, 300b) nach einem der Ansprüche 12-15, wobei die Kommunikationsvorrichtung (300a, 300b) dazu konfiguriert ist, Daten aufzunehmen, die von Kombinationen von Sensoren (400a, 400b) erfasst werden, wobei die Kombination von Sensoren (400a, 400b) unterschiedliche Kategorien von Daten aufnimmt.

17. Kommunikationsvorrichtung (300a, 300b) nach Anspruch 16, wobei die Kommunikationsvorrichtung (300a, 300b) dazu konfiguriert ist, nicht manipulierte Daten von einem ersten Sensor (400a) und manipulierte Daten von einem zweiten Sensor (400b) aufzunehmen und vordefinierte Bedingungen anzuwenden, die Bedingungen zum Berücksichtigen der nicht manipulierten und der manipulierten Daten in Kombination umfassen.

18. Kommunikationsvorrichtung (300a, 300b) nach Anspruch 17, wobei die Kommunikationsvorrichtung (300a, 300b) dazu konfiguriert ist, manipulierte Daten aufzunehmen, die durch einen Sensor (400b) aufgenommene Daten umfassen, die ein beliebiges von Folgenden angeben: einer Temperatur, einem Druck, einer Beschleunigungskraft, von Rückstreuungskoeffizienten, einem Winkel, einer Drehung, einer Bewegung, von Schwingungen, einer Länge oder von Licht, und nicht manipulierte Daten aufzunehmen, die durch einen Sensor (400a) aufgenommene Daten umfassen, die ein beliebiges von Folgenden angeben: von geographischen Koordinaten, einer Entfernung, einer Ausrichtung oder von visuellen Sensordaten.

19. Kommunikationsvorrichtung (300a, 300b) nach einem der Ansprüche 12-18, wobei die Kommunikationsvorrichtung (300a, 300b) ferner dazu konfiguriert ist, mindestens einen Teil der Software zu aktualisieren, wobei der mindestens eine Teil der Software durch die vordefinierten Bedingungen bestimmt ist, die durch die aufgenommenen Daten erfüllt werden.

20. Kommunikationsvorrichtung (300a, 300b) nach Anspruch 19, wobei die Kommunikationsvorrichtung (300a, 300b) dazu konfiguriert ist, mindestens einen schreibgeschützten Speicherbereich, welche der zu aktualisierenden Software zugeordnet ist, in einen beschreibbaren Bereich einzustellen.

21. Kommunikationsvorrichtung (300a, 300b) nach Anspruch 20, wobei die Kommunikationsvorrichtung (300a, 300b) dazu konfiguriert ist, den mindestens einen schreibgeschützte Speicherbereich, welche der zu aktualisierenden Software zugeordnet ist, in einen nicht beschreibbaren Bereich einzustellen, nachdem die erforderliche Software-Aktualisierung abgeschlossen wurde.

22. Kommunikationsvorrichtung (300a, 300b) nach einem der Ansprüche 12-21, wobei die Kommunikationsvorrichtung (300a, 300b) dazu konfiguriert ist, die erfassten Daten mit den vordefinierten Bedingungen zu vergleichen, bis ein beliebiges der folgenden Ereignisse eingetreten ist:
- eine Zeitgeberzeitüberschreitung (150) ist erfolgt oder
- die Kommunikationsvorrichtung (300a, 300b) hat Daten von mindestens einem spezifischen Sensor (400a, 400b) eine vordefinierte Anzahl von Malen erfasst.

23. Computerprogrammprodukt (380a, 380b), umfassend ein nicht transitorisches computerlesbares Medium (340a, 340b), auf dem ein Computerprogramm (350a, 360a, 350b, 360b) gespeichert ist, das bei Ausführung auf der Kommunikationsvorrichtung (300a, 300b) die Kommunikationsvorrichtung (300a, 300b) dazu veranlasst, ein Verfahren nach einem der Ansprüche 1-11 durchzuführen.

## Revendications

1. Procédé dans un dispositif de communication pour exécuter un processus de mise à jour du logiciel dans le dispositif de communication, le procédé comprenant :
- le lancement (110) d'une procédure de capture de données, à l'aide d'au moins un capteur accessible au dispositif de communication, en réponse à la détermination, sur la base d'une analyse interne, sans tenir compte d'une quelconque interaction de l'utilisateur, qu'une mise à jour du logiciel est requise ;
- la comparaison (130) des données acquises pendant la procédure de capture de données initiée à des conditions prédéfinies pour lancer un processus de mise à jour du logiciel ;
- le lancement (170) du processus de mise à jour du logiciel au sein du dispositif de communication en réponse à la détermination (140), par le dispositif de communication, pendant la comparaison (130), que l'environnement de l'au moins un capteur ou que l'au moins un capteur a été manipulé de telle sorte que les données acquises sont forcées de se situer dans un intervalle spécifique, un modèle spécifique ou d'une manière spécifique par rapport à une valeur seuil.

2. Procédé selon la revendication 1, dans lequel le lancement (170) de la mise à jour du logiciel au niveau du dispositif de communication est exécuté par l'un quelconque d'une fonction sécurisée ou d'un circuit sécurisé du dispositif de communication, où la fonction ou circuit sécurisé est une fonction ou un circuit isolé de la fonctionnalité restante du dispositif, permettant ainsi à la fonction sécurisée ou au circuit sécurisé, isolé de la fonctionnalité restante du dispositif, de fonctionner également lorsque la fonctionnalité restante du dispositif ne fonctionne pas de manière adéquate ou prévue.

3. Procédé selon l'une quelconque des revendications précédentes, dans lequel le dispositif de communication comprend :
- une fonction primaire de capture de données provenant d'au moins un capteur, où les données capturées fournissent une représentation de l'environnement dans lequel se trouve le capteur respectif, et
- une fonction secondaire de capture de données provenant d'au moins un capteur, où les données capturées fournissent un déclencheur potentiel pour le processus de mise à jour du logiciel.

4. Procédé selon l'une quelconque des revendications précédentes, dans lequel les données capturées comprennent des données indicatives d'au moins un parmi : la température, la pression, la force d'accélération, les coefficients de rétrodiffusion, l'angle, la rotation, le mouvement, la longueur des vibrations ou la lumière.

5. Procédé selon l'une quelconque des revendications précédentes, dans lequel les données capturées sont acquises à partir d'une combinaison de capteurs, dans lequel la combinaison de capteurs capture différentes catégories de données.

6. Procédé selon la revendication 5, dans lequel les données capturées à partir d'un premier capteur comprennent des données non manipulées et les données capturées à partir d'un second capteur comprennent des données manipulées, et dans lequel les conditions prédéfinies comprennent des conditions pour considérer les données non manipulées et manipulées en combinaison.

7. Procédé selon la revendication 6, dans lequel les données capturées manipulées comprennent des données capturées par un capteur indicatives de l'un quelconque parmi : la température, la pression, la force d'accélération, le coefficient de rétrodiffusion, l'angle, la rotation, le mouvement, les vibrations, la longueur ou la lumière, et dans lequel les données capturées non manipulées comprennent des données capturées par un capteur indicatives de l'une quelconque parmi : les coordonnées géographiques, la distance, l'orientation ou les données de capteur visuel.

8. Procédé selon l'une quelconque des revendications précédentes, dans lequel la mise à jour du logiciel comprend la mise à jour d'au moins une partie du logiciel du dispositif de communication, dans lequel l'au moins une partie du logiciel est déterminée par les conditions prédéfinies remplies par les données acquises.

9. Procédé selon la revendication 8, dans lequel au moins une zone de mémoire protégeable en écriture associée au logiciel à mettre à jour est réglée (160) comme zone inscriptible.

10. Procédé selon la revendication 9, dans lequel l'au moins une zone de mémoire protégeable en écriture associée au logiciel à mettre à jour est réglée (190) comme zone non inscriptible après que la mise à jour logicielle requise a été terminée.

11. Procédé selon l'une quelconque des revendications précédentes, dans lequel les données acquises sont comparées aux conditions prédéfinies jusqu'à ce que l'une quelconque des situations suivantes apparaisse :
- une temporisation (150) s'est produite, ou
- le dispositif de communication a acquis des données d'au moins un capteur spécifique un nombre de fois prédéfini.

12. Dispositif de communication (300a, 300b) pour exécuter un processus de mise à jour du logiciel au sein du dispositif de communication (300a, 300b), le dispositif de communication (300a, 300b) étant configuré pour :
- lancer une procédure de capture de données, à l'aide d'au moins un capteur accessible au dispositif de communication (300a, 300b), en réponse à la détermination, sur la base d'une analyse interne, sans tenir compte d'une quelconque interaction de l'utilisateur, qu'une mise à jour du logiciel est requise ;
- comparer les données acquises pendant la procédure de capture de données initiée à des conditions prédéfinies pour lancer un processus de mise à jour du logiciel ;
- lancer le processus de mise à jour du logiciel au sein du dispositif de communication (300a, 300b) en réponse à la détermination, par le dispositif de communication (300a, 300b), pendant la comparaison (130), que l'environnement de l'au moins un capteur ou que l'au moins un capteur a été manipulé de telle sorte que les données acquises sont forcées de se situer dans un intervalle spécifique, un modèle spécifique ou d'une manière spécifique par rapport à une valeur seuil, dans lequel les conditions prédéfinies comprennent le fait que les données acquises ont été manipulées d'une manière spécifique par rapport à une valeur ou un intervalle de référence.

13. Dispositif de communication (300a, 300b) selon la revendication 12, dans lequel le dispositif de communication (300a, 300b) est en outre configuré pour exécuter le lancement de la mise à jour du logiciel par l'un quelconque d'un circuit sécurisé (380c) ou d'une fonction sécurisée du dispositif de communication (300a, 300b, 300c), où la fonction ou circuit sécurisé est une fonction ou un circuit isolé de la fonctionnalité restante du dispositif, permettant ainsi à la fonction sécurisée ou au circuit sécurisé, isolé de la fonctionnalité restante du dispositif, de fonctionner également lorsque la fonctionnalité restante du dispositif ne fonctionne pas de manière adéquate ou prévue.

14. Dispositif de communication (300a, 300b) selon l'une quelconque des revendications 12 et 13, dans lequel le dispositif de communication (300a, 300b) est configuré pour appliquer :
- une fonction primaire de capture de données provenant d'au moins un capteur (400a, 400b), où les données capturées fournissent une représentation de l'environnement dans lequel se trouve le capteur (400a, 400b) respectif, et
- une fonction secondaire de capture de données provenant d'au moins un capteur (400a, 400b), où les données capturées fournissent un déclencheur potentiel pour le processus de mise à jour du logiciel.

15. Dispositif de communication (300a, 300b) selon l'une quelconque des revendications 12 à 14, dans lequel les données capturées comprennent des données indicatives d'au moins un parmi : la température, la pression, la force d'accélération, les coefficients de rétrodiffusion, l'angle, la rotation, le mouvement, la longueur des vibrations ou la lumière.

16. Dispositif de communication (300a, 300b) selon l'une quelconque des revendications 12 à 15, dans lequel le dispositif de communication (300a, 300b) est configuré pour capturer des données acquises à partir d'une combinaison de capteurs (400a, 400b), dans lequel la combinaison de capteurs (400a, 400b) capture différentes catégories de données.

17. Dispositif de communication (300a, 300b) selon la revendication 16, dans lequel le dispositif de communication (300a, 300b) est configuré pour capturer des données non manipulées provenant d'un premier capteur (400a) et des données manipulées provenant d'un second capteur (400b), et pour appliquer des conditions prédéfinies qui comprennent des conditions pour considérer les données non manipulées et manipulées en combinaison.

18. Dispositif de communication (300a, 300b) selon la revendication 17, dans lequel le dispositif de communication (300a, 300b) est configuré pour capturer des données manipulées comprenant des données capturées par un capteur (400b) indicatives de l'un quelconque parmi : la température, la pression, la force d'accélération, le coefficient de rétrodiffusion, l'angle, la rotation, le mouvement, les vibrations, la longueur ou la lumière, et pour capturer des données non manipulées comprenant des données capturées par un capteur (400a) indicatives de l'une quelconque parmi : les coordonnées géographiques, la distance, l'orientation ou les données de capteur visuel.

19. Dispositif de communication (300a, 300b) selon l'une quelconque des revendications 12 à 18, dans lequel le dispositif de communication (300a, 300b) est en outre configuré pour mettre à jour au moins une partie du logiciel, dans lequel l'au moins une partie du logiciel est déterminée par les conditions prédéfinies remplies par les données acquises.

20. Dispositif de communication (300a, 300b) selon la revendication 19, dans lequel le dispositif de communication (300a, 300b) est configuré pour régler au moins une zone de mémoire protégeable en écriture associée au logiciel à mettre à jour comme zone inscriptible.

21. Dispositif de communication (300a, 300b) selon la revendication 20, dans lequel le dispositif de communication (300a, 300b) est configuré pour régler l'au moins une zone de mémoire protégeable en écriture associée au logiciel à mettre à jour comme zone non inscriptible après que la mise à jour logicielle requise a été terminée.

22. Dispositif de communication (300a, 300b) selon l'une quelconque des revendications 12 à 21, dans lequel le dispositif de communication (300a, 300b) est configuré pour comparer les données acquises aux conditions prédéfinies jusqu'à ce que l'une quelconque des situations suivantes apparaisse :
- une temporisation (150) s'est produite, ou
- le dispositif de communication (300a, 300b) a acquis des données d'au moins un capteur spécifique (400a, 400b) un nombre de fois prédéfini.

23. Produit de programme informatique (380a, 380b), comprenant un support lisible par ordinateur non transitoire (340a, 340b) sur lequel est stocké un programme informatique (350a, 360a, 350b, 360b) qui, lorsqu'il est exécuté sur le dispositif de communication (300a, 300b) amènera le dispositif de communication (300a, 300b) à exécuter un procédé selon l'une quelconque des revendications 1 à 11.
